# FASCICULE DE BREVET EUROPEEN

(11) **EP 1 886 874 B1**
(45) Date de publication et mention de la délivrance du brevet: **24.11.2010**
(21) Numéro de dépôt: 07290940.1
(22) Date de dépôt: 25.07.2007
(51) Int. Cl.: B60R 5/04

(54) **Cache bagages comprenant deux dispositifs d'enroulement à axes décalés longitudinalement**
Gepäckabdeckung, die zwei Aufrollvorrichtungen mit versetzt angeordneten Längsachsen umfasst
Luggage concealing device containing two winding devices with axes offset longitudinally

(30) Priorité: 27.07.2006 FR 0606910
(43) Date de publication de la demande: 13.02.2008
(73) Titulaire: Centre d'Etude et de Recherche pour l'Automobile (CERA), 51100 Reims (FR)
(72) Inventeur: Bayle, André-Xavier, 51100 Reims (FR)
(74) Mandataire: Sayettat, Julien Christian

(56) Documents cités:
- DE-U1- 29 818 442
- FR-A1- 2 873 339

## Description

L'invention concerne un cache bagages de véhicule automobile.

Il est connu, notamment du document FR-2 873 339, de réaliser un cache bagages de véhicule automobile, ledit cache bagages comprenant, de part et d'autre de son centre, deux rideaux enroulables dans un dispositif d'enroulement respectif, les axes desdits dispositifs étant transversaux, lesdits dispositifs étant solidarisés entre eux de façon mobile en rotation, de sorte que ledit cache bagages puisse passer réversiblement d'une configuration d'utilisation, où lesdits dispositifs se prolongent transversalement, à une configuration de rangement par pliage, où lesdits dispositifs se chevauchent transversalement.

Dans l'agencement proposé, il est particulièrement difficile de faire en sorte que les rideaux soient contigus, voire se chevauchent légèrement, lorsqu'ils sont déroulés. De ce fait, la fonction de masquage des bagages est imparfaitement remplie, un espace résiduel subsistant entre lesdits rideaux déroulés.

L'invention a pour but de pallier cet inconvénient.

Le document intermédiaire WO 2007/128936 décrit un cache bagages.

L'invention propose un cache bagages de véhicule automobile, selon la revendication 1.

Du fait que les axes des dispositifs sont décalés longitudinalement, il est possible de réaliser une parfaite contiguïté, voire un léger chevauchement, entre les rideaux déroulés, ce qui permet d'assurer un parfait masquage des bagages par lesdits rideaux.

En outre, un tel décalage longitudinal n'entrave pas le bon fonctionnement du cache bagages, les rideaux étant déroulés sur une longueur différente lorsqu'ils masquent les bagages.

Dans cette description, les termes de positionnement dans l'espace (longitudinal, transversal, latéral, haut,...) sont pris en référence au cache bagages disposé dans le véhicule.

D'autres particularités et avantages de l'invention apparaîtront dans la description qui suit, faite en référence aux figures jointes dans lesquelles :

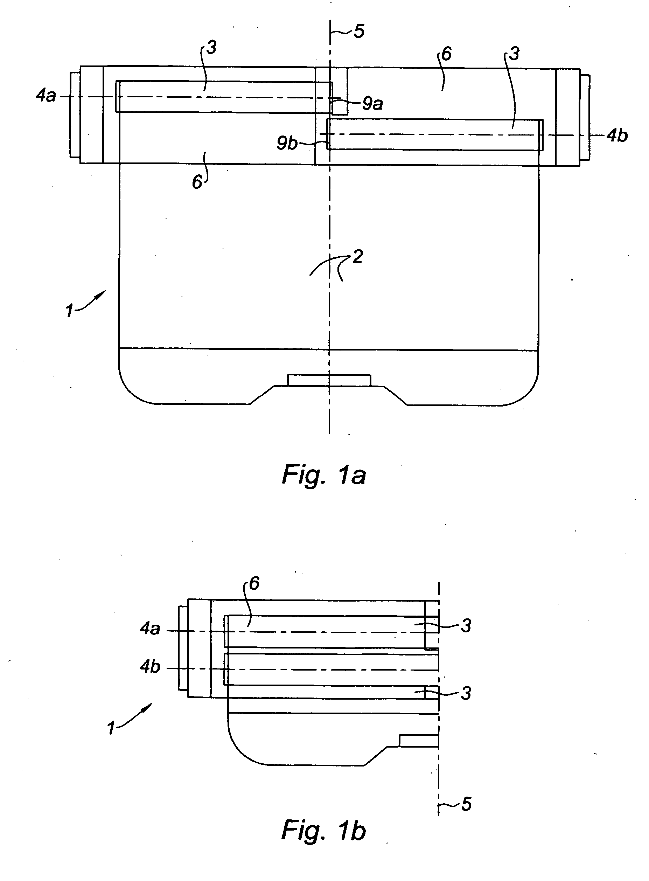

- les figures 1 sont une vue schématique de haut d'un cache bagages selon un premier mode de réalisation, le cache bagages étant en configuration d'utilisation (1a), les rideaux étant déroulés, et de rangement (1b), les rideaux étant enroulés.

En référence aux figures, on décrit à présent un cache bagages 1 de véhicule automobile, ledit cache bagages comprenant deux rideaux 2 enroulables dans respectivement un dispositif d'enroulement 3 respectif, les axes 4a,4b desdits dispositifs étant transversaux, lesdits dispositifs étant solidarisés entre eux de façon mobile par un moyen de solidarisation, ledit moyen étant agencé afin que les axes 4a,4b desdits dispositifs soient décalés longitudinalement, de sorte que ledit cache bagages puisse passer réversiblement d'une configuration d'utilisation, où lesdits dispositifs se prolongent transversalement, à une configuration de rangement, où lesdits dispositifs se chevauchent transversalement.

Selon la réalisation des figures 1, le moyen de solidarisation est sous forme de charnière articulée selon un axe longitudinal 5.

Du fait du décalage longitudinal des dispositifs 3, on peut mettre leurs extrémités internes 9a,9b à l'aplomb l'une de l'autre - respectivement en léger chevauchement - ce qui permet que les rideaux 2 une fois déroulés soient contigus -respectivement se chevauchent légèrement - ceci afin de garantir le masquage des bagages entre lesdits rideaux.

En outre, chaque dispositif 3 est incorporé dans un carter 6 respectif formant demi-boîtier, lesdits carters étant agencés de sorte à former un boîtier sensiblement fermé lorsque lesdits dispositifs sont disposés en chevauchement, ce qui facilite le rangement et la protection du cache bagages 1 lorsqu'il n'est pas utilisé.

Selon une réalisation non représentée, applicable au mode de réalisation sus exposé, le cache bagages 1 comprend un moyen de verrouillage permettant de le verrouiller en configuration d'utilisation et/ou de rangement, ce moyen pouvant être incorporé aux carters 6,7,8.

## Revendications

1. Cache bagages (1) de véhicule automobile, ledit cache bagages comprenant deux rideaux (2) enroulables dans respectivement un dispositif d'enroulement (3) respectif, les axes (4a,4b) desdits dispositifs étant transversaux, lesdits dispositifs étant solidarisés entre eux de façon mobile par un moyen de soliderisation, ledit moyen étant agencé afin que les axes (4a,4b) desdits dispositifs soient décalés longitudinalement, de sorte que ledit cache bagages puisse passer réversiblement d'une configuration d'utilisation, où lesdits dispositifs se prolongent transversalement, à une configuration de rangement, où lesdits dispositifs se chevauchent transversalement, ledit cache bagages étant tel que le moyen de solidarisation est sous forme de charnière articulée selon un axe longitudinal (5).

2. Cache bagages selon la revendication 1, chaque dispositif (3) étant incorporé dans un carter (6) respectif formant demi-boîtier, lesdits carters étant agencés de sorte à former un boîtier sensiblement fermé lorsque lesdits dispositifs sont disposés en chevauchement.

3. Cache bagages selon la revendication 1 ou 2, ledit cache bagages comprenant un moyen de verrouillage permettant de le verrouiller en configuration d'utilisation et/ou de rangement.

## Claims

1. Luggage concealing device (1) for motor vehicle, said luggage concealing device comprising two windable curtains (2) in respectively a respective winding device (3), the axes (4a, 4b) of said devices being transversal, said devices being secured together in a mobile manner by a means of securing, said means being arranged so that the axes (4a, 4b) of said devices are offset longitudinally, in such a way that said luggage concealing device can switch reversibly from a configuration for use, wherein said devices are extended transversally, to a configuration for storage, wherein said devices overlap transversally, said luggage concealing device being such that the means of securing is in the form of a hinge articulated according to a longitudinal axis (5).

2. Luggage concealing device according to claim 1, each device (3) being incorporated into a respective casing (8) forming a half-housing, said casings being arranged in such a way as to form a substantially closed housing when said devices are arranged in an overlapping manner.

3. Luggage concealing device according to claim 1 or 2, said luggage concealing device comprising a means of locking making it possible to lock in the configuration for use and/or for storage.

## Patentansprüche

1. Gepäckabdeckung (1) für Kraftfahrzeuge, wobei die Gepäckabdeckung zwei Vorhänge (2) umfasst, die jeweils in einer jeweiligen Aufrollvorrichtung (3) aufrollbar sind, wobei die Achsen (4a, 4b) der Vorrichtungen quer liegen, wobei die Vorrichtungen durch ein Verbindungsmittel beweglich miteinander verbunden sind, wobei das Mittel angeordnet ist, damit die Achsen (4a, 4b) der Vorrichtungen in Längsrichtung versetzt werden, so dass die Gepäckabdeckung umkehrbar von einer Verwendungskonfiguration, in der sich die Vorrichtungen quer verlängern, in eine Staukonfiguration, in der die Vorrichtungen sich quer überlappen, übergehen kann, wobei die Gepäckabdeckung derart ist, dass das Verbindungsmittel als Scharnier vorliegt, das an einer Längsachse (5) entlang angelenkt ist.

2. Gepäckabdeckung nach Anspruch 1, wobei jede Vorrichtung (3) in ein jeweiliges Gehäuse (8) integriert ist, der eine Gehäusehälfte bildet, wobei die Gehäuse derart angeordnet sind, dass sie ein im Wesentlichen geschlossenes Gehäuse bilden, wenn die Vorrichtungen überlappend angeordnet sind.

3. Gepäckabdeckung nach Anspruch 1 oder 2, wobei die Gepäckabdeckung ein Verriegelungsmittel umfasst, das es ermöglicht, dieses in der Verwendungs- und/oder Staukonfiguration zu verriegeln.
